# EUROPEAN PATENT SPECIFICATION

(11) **EP 3 252 695 B1**
(45) Date of publication and mention of the grant of the patent: **07.08.2024**
(21) Application number: 17174213.3
(22) Date of filing: 02.06.2017
(51) Int. Cl.: G06Q 30/0251, H04W 4/12

(54) **METHOD, DEVICE AND SYSTEM FOR SENDING AND RECEIVING INFORMATION**
VERFAHREN, VORRICHTUNG UND SYSTEM ZUM SENDEN UND EMPFANGEN VON INFORMATIONEN
PROCÉDÉ, DISPOSITIF ET SYSTÈME D'ENVOI ET DE RÉCEPTION D'INFORMATIONS

(30) Priority: 03.06.2016 WO PCT/CN2016/084670
(43) Date of publication of application: 06.12.2017
(73) Proprietor: Beijing Xiaomi Mobile Software Co., Ltd., Beijing 100085 (CN)
(72) Inventor: WU, Liangxiong, Beijing 100085 (CN); LIU, Jianquan, Beijing 100085 (CN); WANG, Guangjian, Beijing 100085 (CN)
(74) Representative: Cabinet Beau de Loménie

(56) References cited:
- WO-A1-2015/116533
- CN-A- 103 546 626
- US-A1- 2015 310 493

## Description

### TECHNICAL FIELD

The present disclosure relates to the technical art of internet, and more particularly, to a method, a device and a system for sending and receiving information.

### BACKGROUND

An application lock APP is an APP for locking applications in a terminal. When there is a plurality of APPs in the terminal, if the user wishes to lock one of the APPs, the user may lock the APP by configuring the application lock APP. When the user uses the APP after locking the APP, an APP unlock interface may be prompted, and the user may use the APP normally after input of a correct unlock password in the APP unlock interface.

Document WO 2015/116533 A1 discloses a method for providing an ad-supported mobile data plan, where ad display may be tied to data usage levels and user input. A method includes receiving, using a processor, user interaction with advertisement content displayed on a device; retrieving a data usage limited associated with the device; and causing a change in the data usage limit based on the user interaction with the advertisement content displayed on the device. Document US 2015/310493 A1 discloses an advertisement delivery system providing an advertisement for display together with a lock screen on a mobile device.

### SUMMARY

The invention is defined in the appended set of claims.

The present disclosure provides a method, a device and a system for sending and receiving information. The technical solution is as below.

A first aspect provides a method implemented by a server for sending information, the method including:
acquiring an identifier of an APP (i.e. an application), the APP being an application having an APP unlock interface;
inquiring about information corresponding to the identifier of the APP, the information being information to be promoted with respect to the APP that is identified by an information promoter; and
sending the information to a target terminal, the information being configured to be shown in the APP unlock interface corresponding to the APP.

In a particular embodiment, the acquiring an identifier of an APP includes:
receiving a request for acquiring information sent from an application lock APP in the target terminal, the request for acquiring information carrying the identifier of the APP locked by the application lock APP.

In a particular embodiment, the sending the information to a target terminal includes:
sending the information to an application lock APP in the target terminal, the application lock APP being configured to generate and show the APP unlock interface including the information when the APP is triggered.

In a particular embodiment, the method further includes:
if the inquired information includes at least two pieces of information, acquiring persona information of the user of the target terminal; and
selecting the information having highest matching degree with the persona information of the user from the at least two pieces of information as the information to be sent.

In a particular embodiment, the selecting the information having highest matching degree with the persona information of the user from the at least two pieces of information as the information to be sent includes:
if the persona information of the user includes age, selecting the information having highest matching degree with the age from the at least two pieces of information as the information to be sent; or, if the persona information of the user includes sex, selecting the information having highest matching degree with the sex from the at least two pieces of information as the information to be sent; or, if the persona information of the user includes geographical position, selecting the information having highest matching degree with the geographical position from the at least two pieces of information as the information to be sent; or, if the persona information of the user includes educational background, selecting the information having highest matching degree with the educational background from the at least two pieces of information as the information to be sent; or, if the persona information of the user includes browser cache information, selecting the information having highest matching degree with the browser cache information from the at least two pieces of information as the information to be sent; or, if the persona information of the user includes recently shopping information, selecting the information having highest matching degree with the recently shopping information from the at least two pieces of information as the information to be sent; or, if the persona information of the user includes calendar information, selecting the information having highest matching degree with a location in the calendar information from the at least two pieces of information as the information to be sent.

A second aspect provides a method implemented by a terminal (or device) for receiving information, including:
providing an identifier of an APP (i.e. an application) to a server, the APP being an application having an APP unlock interface;
receiving information sent from the server, the information being information corresponding to the identifier of the APP; and
showing the information in the APP unlock interface corresponding to the APP.

In a particular embodiment, the providing an identifier of an APP to a server includes:
sending a request for acquiring information to the server via an application lock APP, the request for acquiring information carrying the identifier of the APP locked by the application lock APP.

In a particular embodiment, the receiving information sent from the server includes:
receiving the information sent from the server via an application lock APP.

In a particular embodiment, the showing the information in the APP unlock interface corresponding to the APP includes:
showing the information in the APP unlock interface corresponding to the APP in a predetermined showing form, the predetermined showing form including at least one of the following showing forms:
showing as a background image;
showing as a background animation;
showing as a background of a password input control;
showing in the form of webpage link; and
showing as an APP dock.

A third aspect provides a server (or device) for sending information including:
an acquiring module, configured to acquire an identifier of an APP, the APP being an application having an APP unlock interface;
an inquiring module, configured to inquire about information corresponding to the identifier of the APP, the information being information to be promoted with respect to the APP that is identified by an information promoter; and
a sending module, configured to send the information to a target terminal, the information being configured to be shown in the APP unlock interface corresponding to the APP.

In a particular embodiment, the acquiring module is configured to receive a request for acquiring information sent from an application lock APP in the target terminal, the request for acquiring information carrying the identifier of the APP locked by the application lock APP.

In a particular embodiment, the sending module is configured to send the information to an application lock APP in the target terminal, the application lock APP being configured to generate and show the APP unlock interface including the information when the APP is triggered.

In a particular embodiment, the device further includes a selecting module,
the acquiring module is configured to, if the inquired information includes at least two pieces of information, acquire persona information of the user of the target terminal, and
the selecting module is configured to select the information having highest matching degree with the persona information of the user from the at least two pieces of information as the information to be sent.

In a particular embodiment, the selecting module is configured to, if the persona information of the user includes age, select the information having highest matching degree with the age from the at least two pieces of information as the information to be sent; or, the selecting module is configured to, if the persona information of the user includes sex, select the information having highest matching degree with the sex from the at least two pieces of information as the information to be sent; or, the selecting module is configured to, if the persona information of the user includes geographical position, select the information having highest matching degree with the geographical position from the at least two pieces of information as the information to be sent; or, the selecting module is configured to, if the persona information of the user includes educational background, select the information having highest matching degree with the educational background from the at least two pieces of information as the information to be sent; or, the selecting module is configured to, if the persona information of the user includes browser cache information, select the information having highest matching degree with the browser cache information from the at least two pieces of information as the information to be sent; or, the selecting module is configured to, if the persona information of the user includes recently shopping information, select the information having highest matching degree with the recently shopping information from the at least two pieces of information as the information to be sent; or, the selecting module is configured to, if the persona information of the user includes calendar information, select the information having highest matching degree with a location in the calendar information from the at least two pieces of information as the information to be sent.

A fourth aspect provides a device (or terminal) for receiving information including:
a providing module, configured to provide an identifier of an APP (i.e. an application) to a server, the APP being an application having an APP unlock interface;
a receiving module, configured to receive information sent from the server, the information being information corresponding to the identifier of the APP; and
a showing module configured to show the information in the APP unlock interface corresponding to the APP.

In a particular embodiment, the providing module is configured to send a request for acquiring information to the server via an application lock APP, the request for acquiring information carrying the identifier of the APP locked by the application lock APP.

In a particular embodiment, the receiving module is configured to receive the information sent from the server via an application lock APP.

In a particular embodiment, the showing module is configured to show the information in the APP unlock interface corresponding to the APP in a predetermined showing form, the predetermined showing form including at least one of the following showing forms:
showing as a background image;
showing as a background animation;
showing as a background of a password input control;
showing in the form of webpage link; and
showing as an APP dock.

A fifth aspect provides a system for sending information including a server and a target terminal, the server and the target terminal being interconnected via a wired or wireless network,
wherein the server includes a device for sending information according to the third aspect of the present disclosure, and the target terminal includes a device for receiving information according to the fourth aspect of the present disclosure, or, the server includes a device for sending information according to the fifth aspect, and the target terminal includes a device for receiving information according to the sixth aspect.

In one particular embodiment, the steps of the methods for sending information and for receiving information are determined by computer program instructions.

Consequently, according to a sixth aspect, the invention is also directed to a computer program for executing the steps of the method for sending information as defined above when this program is executed by a computer.

According to a seventh aspect, the invention is also directed to a computer program for executing the steps of the method for receiving information as defined above when this program is executed by a computer.

The above programs can use any programming language and take the form of source code, object code or a code intermediate between source code and object code, such as a partially compiled form, or any other desirable form.

The invention is also directed to a computer-readable information medium containing instructions of at least one of the computer programs as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in embodiments of the present disclosure may have the following beneficial effects.

The server inquires about information corresponding to the identifier of the APP, the information being information to be promoted with respect to the APP that is identified by an information promoter. After the server sends the information to the target terminal, the target terminal shows the information in the APP unlock interface corresponding to the APP. It may solve the technical problem that a current application lock APP may be used only for locking and unlocking APPs, such that information may be shown in the APP unlock interface of the APP, and information relating to the APP may be provided to the user of the APP, thereby performing the effect of using the APP unlock interface as an effective information promoting window.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a structural diagram illustrating a system for sending information, according to an exemplary embodiment.
Fig. 2 is a flow chart illustrating a method for sending information, according to an exemplary embodiment.
Fig. 3 is a flow chart illustrating a method for sending information, according to an exemplary embodiment.
Fig. 4 illustrates a schematic diagram of an interface when the information promoting terminal reports the information and promoting condition to a server.
Fig. 5 is a schematic diagram of an interface of the APP unlock interface, according to an exemplary embodiment.
Fig. 6 is a schematic diagram of an interface of the APP unlock interface, according to an exemplary embodiment.
Fig. 7 is a schematic diagram of an interface of the APP unlock interface, according to an exemplary embodiment.
Fig. 8 is a schematic diagram of an interface of the APP unlock interface, according to an exemplary embodiment.

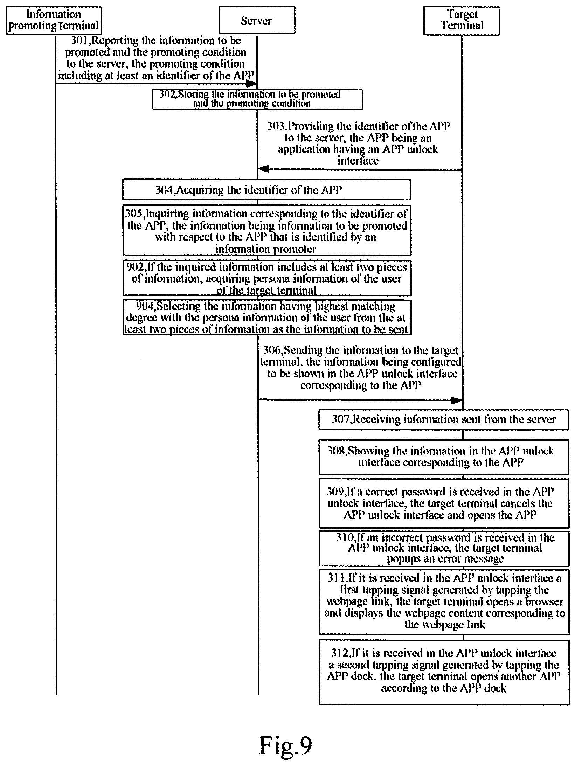

Fig. 9 is a flow chart illustrating a method for sending information, according to an exemplary embodiment.
Fig. 10 is a block diagram illustrating a device for sending information, according to an exemplary embodiment.
Fig. 11 is a block diagram illustrating a device for sending information, according to an exemplary embodiment.
Fig. 12 is a block diagram illustrating a target terminal, according to an exemplary embodiment.
Fig. 13 is a block diagram illustrating a server, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

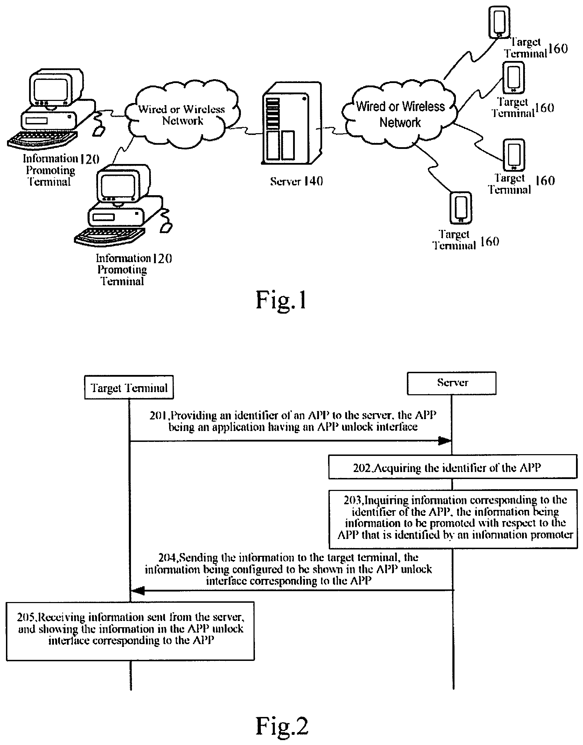

Fig. 1 is a structural diagram illustrating a system for sending information, according to an exemplary embodiment. The system for sending information includes at least one information promoting terminal 120, a server 140 and at least one target terminal 160.

Each information promoting terminal 120 is a terminal used by an information promoter. The information promoter may be an operator which provides information to be promoted for any appropriate purpose (advertising etc.).The information promoting terminal 120 may be a smart phone, a tablet, a portable computer, a desktop computer, and the like. Optionally, a promoting application (APP) may be running in the information promoting terminal 120. The promoting APP is configured to upload information to be promoted to the server 140. Optionally, the promoting APP may be a webpage client.

In the present document, the term APP means "application".

In a particular example, the information promoting terminal 120 is connected to the server 140 via a wired or wireless network.

The server 140 is configured to manage information uploaded from the information promoting terminal 120, and send the information to the target terminal 160 according to the promoting condition configured by the information promoting terminal 120. The promoting condition includes at least an identifier of the APP to be promoted. The server 140 may be one server, a plurality of servers or a could computing center. Optionally, the server 140 may be constructed by the supplier of the APP having the APP unlock interface, or may be constructed by the supplier of the application lock APP.

Optionally, the server 140 is further connected to the target terminal 160 via a wired or wireless network.

Each target terminal 160 is a terminal (or device) used by a general user (or end-consumer). The target terminal 160 may be a smart phone, a tablet, a portable computer, a desktop computer, and the like. Optionally, the target terminal 160 is installed with an APP having an APP unlock interface, which is a native interface provided by the APP itself. Optionally, the target terminal 160 may be installed with an application lock APP and other APPs other than the application lock APP, wherein said other APPs have APP unlock interfaces provided by the application lock APP.

While using the application lock APP, a password is required to be set by the user. Optionally, the password may be a digital password, a graphic password, a face image password or a fingerprint password. After the user sets the password, the user selects a second APP to be encrypted among respective installed APPs. After locking the second APP, when the user uses the second APP, the application lock APP will intercept an initiating instruction of the second APP, and generate and display an APP unlock interface corresponding to the second APP, the user is required to input correct password on the APP unlock interface to use the second APP normally.

The target terminal 160 is configured to receive information corresponding to an APP and sent by the server 140, and to display the information in an APP unlock interface of the APP.

Fig. 2 illustrates a flow chart of a method for sending information according to an exemplary embodiment. In the present embodiment, for example, the method for sending information is implemented in the server 140 and a target terminal 160 as illustrated in Fig. 1. The method for sending information includes the following steps.

In step 201, the target terminal 160 provides an identifier of an APP having an APP unlock interface to the server.

In a particular example, the APP unlock interface is a native interface of the APP; alternatively, the APP unlock interface is an interface provided by the application lock APP.

In step 202, the server 140 acquires the identifier of the APP.

In a particular example, the identifier of the APP is unique. Optionally, the identifier of the APP is represented by the name of the APP. Optionally, the identifier of the APP is represented by a character string. The form of the identifier of the APP is not limited in the embodiments of the present disclosure.

In step 203, the server 140 inquires about (i.e. obtains or determines) information corresponding to the identifier of the APP. The information is information to be promoted and designated by an information promoter with respect to the APP.

A corresponding relationship between the identifier of the APP and the information to be promoted is stored in the server. Table 1 schematically illustrates the corresponding relationship.

**Table 1**

| Identifier of the APP | Information to be promoted |
|---|---|
| Study APP A | Class information of training class XX |
| Fitness APP B | Introduction information of healthy weight loss |
| Shopping APP C | Discount information of shopping mall W on holiday XX |
| Music APP D | Memorial information of 100 anniversary of birth of the singer M |
| ...... | ...... |

If the identifier of the APP is the "Study APP A", the server 140 may determine that the information corresponding to the "Study APP A" is the "Class information of training class XX".

In step 204, the server 140 sends the information to the target terminal 160, so that the information can be shown in the APP unlock interface corresponding to the APP.

In step 205, the target terminal 160 receives the information sent from the server 140, and shows the information in the APP unlock interface corresponding to the APP.

To sum up, in the method for sending information according to the present embodiment, the server inquires about (or determines) information corresponding to the identifier of the APP, the information being information to be promoted with respect to the APP that is identified by an information promoter. After the server sends the information to the target terminal, the target terminal shows the information in the APP unlock interface corresponding to the APP. It may solve the technical problem that a current application lock APP may be used only for locking and unlocking APPs, such that information may be shown in the APP unlock interface of the APP, and information relating to the APP may be provided to the user of the APP, thereby performing the effect of using the APP unlock interface as an effective information promoting window.

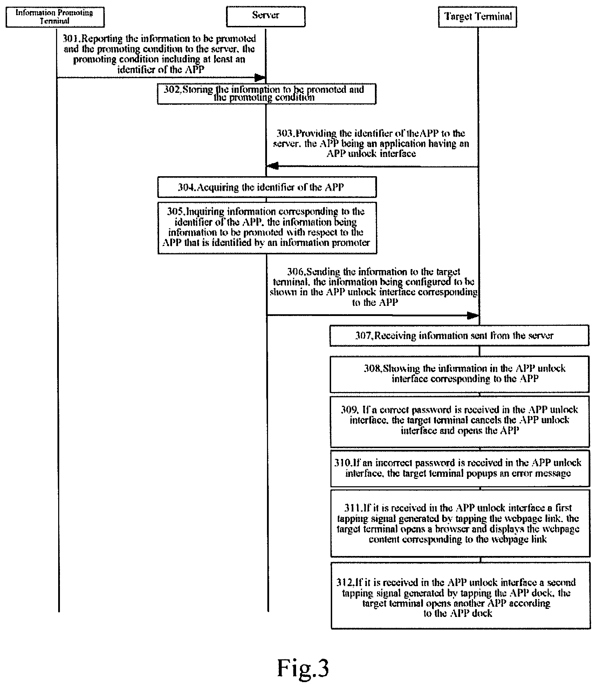

Fig. 3 illustrates a flow chart illustrating a method for sending information, according to an exemplary embodiment. In the present embodiment, for example, the method for sending information is implemented in the system for sending information as illustrated in Fig. 1. The method for sending information includes the following steps.

In step 301, the information promoting terminal 120 reports the information to be promoted and the promoting condition to the server 140. The promoting condition includes at least the identifier of the APP.

When the information promoter has a promoting requirement, the information to be promoted and the promoting condition are reported to the server 140 through the information promoting terminal 120.

The form of the information to be promoted includes but not limited to: images, characters, videos, web links, audios, and the like.

In the present document, an information to be promoted means an information that one (e.g. a promoter) which to present or show to a user, i.e. a user of a target terminal 160. Information to be promoted may be advertising information.

The content of the information to be promoted includes but not limited to: recommended APP information, APP function introduction information, training class consulting information, sales promotion information, health management information, recommended audio and video information, movie on-show information, and the like.

The promoting condition includes at least the identifier of the APP. The APP is an APP corresponding to the information to be promoted. For example, if the information to be promoted is the health management information, the corresponding APP is a fitness APP.

In a particular example, the promoting condition further includes at least one of age condition, sex condition, geographical position condition, educational background condition, recently browsed information condition, and recently shopping information condition. These promoting conditions may be configured as necessary conditions or optional conditions. When these promoting conditions are configured as optional conditions, the target terminal satisfying these promoting conditions may be the target terminal having high priority, wherein the target terminal that matches more promoting conditions may have a higher priority.

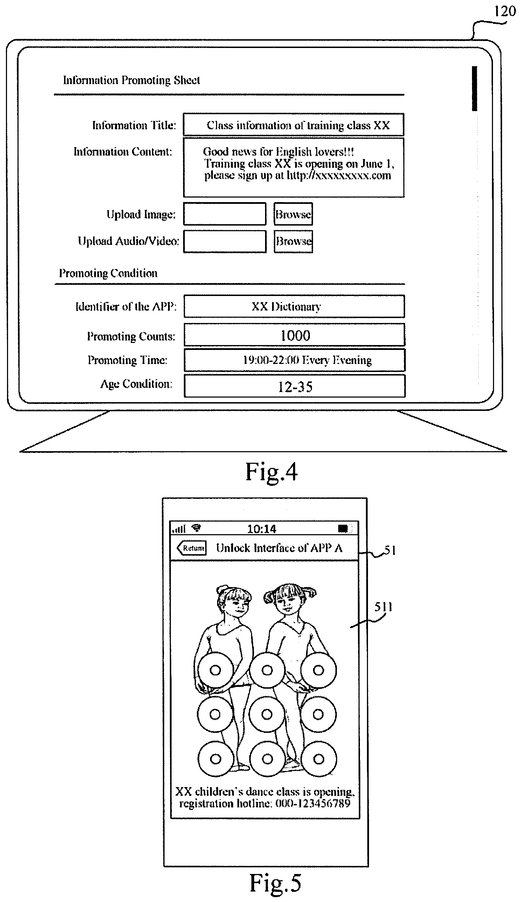

Schematically, referring to Fig. 4, the information promoting terminal 120 uploads information entitled "Class information of training class XX" to be promoted to the server via a web page client, wherein the content of the information includes "Good news for English lovers!!! Training class XX is opening on June 1, please sign up at http:// xxxxxxxxx.com", and the promoting condition includes: APP "XX dictionary" and age "12-35".

In a particular example, the promoting condition further includes promoting counts or promoting time. For example, the promoting counts are 1000 times. For another example, the promoting time is 19:00-22:00 every evening.

In a particular example, the promoting condition further includes showing information. The showing information includes but not limited to at least one of the following forms: showing as a background image; showing as a background animation; showing as a background of a password input control; showing in the form of webpage link; and showing as an APP dock.

In step 302, the server 140 stores the information to be promoted and the promoting condition.

The server 140 may receive the information to be promoted and the promoting condition uploaded from respective information promoting terminals 120.

Table 2 schematically illustrates the information to be promoted and the promoting condition stored in the server 140.

**Table 2**

| Information title | Identifier of the correlated APP | Promoting counts or promoting time | Information content | Showing form |
|---|---|---|---|---|
| Class information of training class XX | Study APP A | 1000 | Good news for English lovers!!! | Showing in the form of webpage link |
| | | | Training class XX is opening on June 1, please sign up at http://xxxxxxxxx.com | |
| Introduction information of healthy weight loss | Fitness APP B | 2000 | Aerobics twice a week, keeping your perfect figure | Showing in the form of webpage link |
| Discount information of shopping mall W on holiday XX | Shopping APP C | 100000 | Image and webpage link | The image is shown as a background image, and the webpage link is shown in the form of webpage link |
| Memorial information of 100 anniversary of birth of the singer M | Music APP D | A certain day | Image and circular icon | The image is shown as a background image, and the circular icon is shown as a background of a password input control |
| News APP | Chat APP E | 19:00-22:00 Every evening | Docking interface of the news APP | Showing as an APP dock |
| ...... | ...... | ...... | ...... | ...... |

In step 303, the target terminal 160 provides the identifier of the APP having the APP unlock interface to the server 140.

In a particular example, the target terminal 160 sends a request for acquiring information to the server 140 via the application lock APP, wherein the request for acquiring information carries the identifier of the APP that is locked by the application lock APP.

For example, the chat APP E and the shopping APP C in the target terminal 160, noted A, are configured to be locked by the user, then the target terminal A sends the request for acquiring information to the server 140, wherein the request for acquiring information carries the identifiers of the chat APP E and the shopping APP C.

In a particular example, the target terminal 160 sends the request for acquiring information to the server 140 every predetermined time intervals. Optionally, the target terminal 160 sends the request for acquiring information to the server at each boot. Optionally, the target terminal 160 sends the request for acquiring information to the server 140 when the configuration of the locked APP is changed. Optionally, the target terminal 160 sends the request for acquiring information to the server 140 upon interception of an initiating instruction for initiating the locked APP by the user.

The timing for the target terminal 160 to send the request for acquiring information is not limited in the present embodiment, and the request for acquiring information may be sent at least one of the above timings. Meanwhile, the count for the target terminal 160 to send the request for acquiring information is not limited in the present embodiment. After receiving the request for acquiring information once, the server 140 may actively send the information to the target terminal 160 based on the historically stored request for acquiring information in the subsequent time.

In step 304, the server 140 acquires the identifier of the APP.

In a particular example, the server 140 receives the request for acquiring information sent from the application lock APP in the target terminal 160, and acquires the identifier of the APP from the request for acquiring information.

For example, the request for acquiring information carries the identifiers of the chat APP E and the shopping APP C, and the server 140 acquires the identifiers of the chat APP E and the shopping APP C from the request for acquiring information.

In a particular example, the server 140 further stores a corresponding relationship between an identifier of the target terminal 160 and the identifier of the APP.

In step 305, the server 140 inquires the information corresponding to the identifier of the APP, wherein the information is information to be promoted with respect to the APP that is identified by an information promoter.

In a particular example, after receiving the request for acquiring the information, the server 140 performs the step 305. Alternatively, the server 140 performs the step 305 every predetermined time interval based on the stored corresponding relationship between the identifier of the target terminal 160 and the identifier of the APP. The time for performing the step 305 is not limited in the present embodiment.

A corresponding relationship between the identifier of the APP and the information to be promoted is stored in the server 140. The server 140 inquires the information to be promoted in the corresponding relationship according to the identifier of the APP.

For example, the server 140 inquires according to the "Chat APP E" that the information corresponding to the "Chat APP E" is "News APP". For another example, the server 140 inquires according to the "Shopping APP C" that the information corresponding to the "Shopping APP C" is "Discount information of shopping mall W on holiday XX".

In a particular example, after inquiring (determining) the information corresponding to the identifier of the APP, the server further detects whether the target terminal satisfies other promoting condition including at least one of an age condition, a sex condition, a geographical location condition, an education condition, a recent browsing information condition, a recent shopping information condition, and the like.

In step 306, the server 140 sends the information to the target terminal 160, wherein the information is configured to be shown in the APP unlock interface corresponding to the APP.

In a particular example, the server 140 sends the information to the application lock APP in the target terminal 160, wherein the information is configured to be shown in the APP unlock interface corresponding to the APP.

In a particular example, the server 140 simultaneously sends the corresponding relationship between the identifier of the APP and the information to the application lock APP in the target terminal 160.

In a particular example, the server 140 further sends a showing form of the information in an APP interface to the target terminal 160.

In step 307, the target terminal 160 receives the information sent from the server 140.

In a particular example, the application lock APP in the target terminal 160 receives the information sent from the server 140. Optionally, the application lock APP in the target terminal 160 simultaneously receives the corresponding relationship between the identifier of the APP and the information. Optionally, the application lock APP in the target terminal 160 further simultaneously receives the showing form of the information.

Schematically, Table 3 illustrates the content received by the target terminal 160.

**Table 3**

| Information title | Identifier of the correlated APP | Information content | Showing form |
|---|---|---|---|
| Discount information of shopping mall W on holiday XX | Shopping APP C | Image and webpage link | The image is shown as a background image, and the webpage link is shown in the form of webpage link |
| News APP | Chat APP E | Docking interface of the News APP | Showing as an APP dock |

In step 308, the target terminal 160 shows the information in the APP unlock interface corresponding to the APP.

When the user opens an APP locked by the application lock APP, the target terminal 160 will intercept the initiating instruction corresponding to the APP, wherein the initiating instruction may be triggered by tapping the APP icon, tapping the notification message in the taskbar, tapping a corresponding APP preview in the APP management interface, or the like. The target terminal generates and displays an APP unlock interface corresponding to the APP according to the information corresponding to the identifier of the APP.

In a particular example, if the information includes an image and the showing form of the image is "showing as a background image", the application lock APP in the target terminal 160 displays the image in the background image of the APP unlock interface.

Schematically, as illustrated in Fig. 5, if the information includes the image "poster of children's dance class" 511, the image "poster of children's dance class" 511 is displayed in the target terminal 160 as the background image of the APP unlock interface 51 in the APP unlock interface 51 of APP A.

If the information includes a video and the showing form of the video is "showing as a background animation", the application lock APP in the target terminal 160 displays the video in the background animation of the APP unlock interface.

If the information includes a control element and the showing form of the control element is "showing as a background of a password input control", the application lock APP in the target terminal 160 displays the control element in a background of the password input control in the APP unlock interface.

The password input control may be at least one of a digital password input control, a graphic password input control, a voiceprint password input control and a fingerprint password input control.

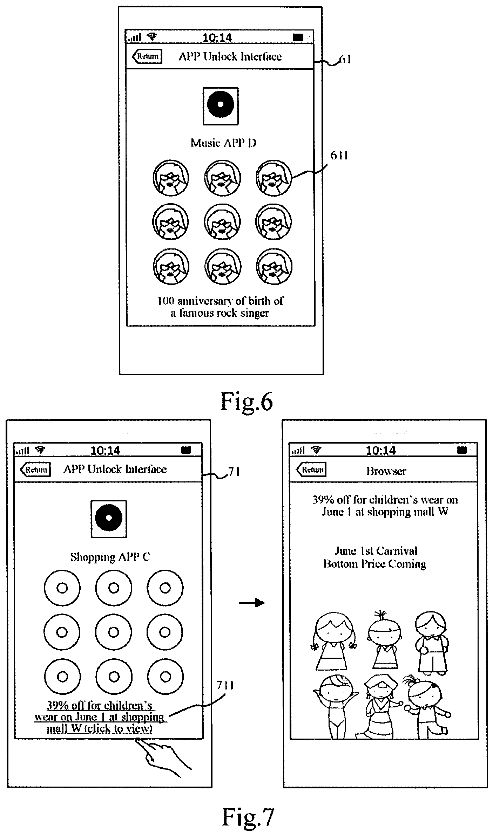

Schematically, as illustrated in Fig. 6, taking the password input control being a "Sudoku" graphic password input control for example, if the information includes a control element, i.e., a circular head portrait of a famous rock singer 611, the circular head portrait 611 is shown as the background of the "Sudoku" graphic password input control in the APP unlock interface 61 of the music APP D.

If the information includes a webpage link and the showing form of the control element is "showing in the form of webpage link", the application lock APP in the target terminal displays the webpage link in the form of webpage link in the APP unlock interface.

Schematically, as illustrated in Fig. 7, if the information includes a webpage link "39% off for children's wear on June 1 at shopping mall W", the webpage link 711 is shown in the form of webpage link in the APP unlock interface 71 of the shopping APP C.

When the information includes an APP docking interface for other APPs and the showing form of the APP docking interface is "showing as an APP dock", the application lock APP in the target terminal displays an APP dock corresponding to the APP docking interface in the APP unlock interface.

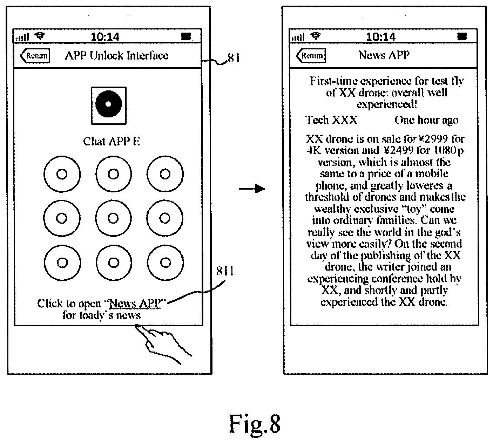

Schematically, as illustrated in Fig. 8, when the information includes a docking interface for a news APP, the APP dock 811 of the news APP is displayed according to the docking interface in the APP unlock interface 81 of the chat APP E.

In step 309, if a correct password is received in the APP unlock interface, the target terminal cancels the APP unlock interface and opens the APP.

If the user inputs a correct password in the APP unlock interface, the application lock APP in the target terminal cancels the display of the APP unlock interface, and opens the APP for the user's normal use.

In step 310, if an incorrect password is received in the APP unlock interface, the target terminal popups an error message.

If the user inputs an incorrect password in the APP unlock interface, the application lock APP in the target terminal generates and displays an error message. The error message is configured to indicate that the unlock password inputted by the user is incorrect, and it is required to be inputted again or the user is refused to use the APP.

In step 311, if it is received in the APP unlock interface a first tapping signal generated by tapping the webpage link, the target terminal 160 opens a browser and displays the webpage content corresponding to the webpage link.

If the user taps the webpage link in the APP unlock interface instead of inputting password, the application lock APP in the target terminal 160 opens a browser and displays the webpage content corresponding to the webpage link. Optionally, the browser may be a built in browser of the application lock APP, or may be an independent browser installed in the target terminal 160.

Schematically, referring to Fig. 7, when the webpage link "39% off for children's wear on June 1 at shopping mall W" is tapped, the application lock APP opens the browser, and loads and displays the webpage content corresponding to the webpage link 711 by using the browser.

In step 312, if it is received in the APP unlock interface a second tapping signal generated by tapping the APP dock, the target terminal 160 opens another APP according to the APP dock.

If the user taps the APP dock in the APP unlock interface instead of inputting password, the application lock APP in the target terminal docks another APP into running state using the docking interface corresponding to the APP dock.

Schematically, referring to Fig. 8, when the APP dock 811 is tapped, the application lock APP docks the news APP into running state according to the docking interface of the news APP.

To sum up, in the method for sending information according to the present embodiment, the server inquires about (determines) information corresponding to the identifier of the APP, the information being information to be promoted with respect to the APP that is identified by an information promoter. After the server sends the information to the target terminal, the target terminal shows the information in the APP unlock interface corresponding to the APP. It may solve the technical problem that a current application lock APP may be used only for locking and unlocking APPs, such that information may be shown in the APP unlock interface of the APP, and information relating to the APP may be provided to the user of the APP, thereby performing the effect of using the APP unlock interface as an effective information promoting window.

Since most APPs (applications) are not developed for showing information, when it is desired to show information relating to the APP, the related art may need to display the information in a webpage providing the installation package of the APP, or display the information in the installation management program of the APP. While in the method for sending information according to the present embodiment, by displaying information relating to the APP in the APP unlock interface, a new channel or scheme for showing information is provided, such that the information may be sent to the user precisely and timely when the user uses the APP, thereby sending information with a efficiency and accuracy higher than the related art.

According to the method for sending information provided in the present embodiment, there are provided a plurality of showing information for showing the information in the APP unlock interface, thereby showing the information in a diversified presentation without affecting the normal use of the APP unlock interface by the user.

In optional embodiments, with respect to the information sent from the information promoter, the corresponding promoting condition may further include a promoting count. In this case, after step 305, the server is required to detect whether the information has been sent more times than the promoting count. If the information is not sent more times than the promoting count, step 306 is performed. If the information is sent more times than the promoting count, the server will not send the information to the target terminal.

In optional embodiments, with respect to the information sent from the information promoter, the corresponding promoting condition may further include promoting time. In this case, after step 305, the server is required to detect whether the current time belongs to the promoting time. If the current time belongs to the promoting time, step 306 is performed. If the current time does not belong to the promoting time, the server will not send the information to the target terminal.

It should be noted that, with respect to a certain APP, there may be a plurality of information promoters that have provided information corresponding to the identifier of the APP. That is, in step 305, the server inquires at least two pieces of information corresponding to the identifier of the APP, then the above method for sending information may further include steps 902 and 904, as illustrated in the figures.

In step 902, if the inquired information includes at least two pieces of information, the server 140 acquires persona information of the user of the target terminal 160.

The persona information of the user includes but not limited to age, sex, geographical position, educational background, browser cache information, recently shopping information, name of recently used application, calendar information, or the like. These persona information of the user may be uploaded to the server using a predetermined program in the target terminal. The predetermined program may be the application lock APP, and may also be another APP other than the application lock APP. The upload procedure of the predetermined program is required to have the user's authorization or agreement.

In step 904, the server 140 selects the information having highest matching degree with the persona information of the user from the at least two pieces of information as the information to be sent.

In a particular example, when the persona information of the user includes age, the information having highest matching degree with the age is selected from the at least two pieces of information as the information to be sent.

For example, two pieces of information, i.e., information A and information B, may correspond to the APP, and information A is provided with an age condition "12-33" and information B is not provided with any age condition. If the persona information of the user includes an age "18", the server 140 selects the information A as the information to be sent, and if the persona information includes an age "40", the server 140 selects the information B as the information to be sent.

In a particular example, when the persona information of the user includes sex, the information having highest matching degree with the sex is selected from the at least two pieces of information as the information to be sent.

For example, two pieces of information, i.e., information A and information B, may correspond to the APP, and information A is provided with a sex condition "male" and information B is provided with a sex condition "female". If the persona information of the user includes a sex "male", the server selects the information A as the information to be sent, and if the persona information includes a sex "female", the server selects the information B as the information to be sent.

In a particular example, when the persona information of the user includes geographical position, the information having highest matching degree with the geographical position is selected from the at least two pieces of information as the information to be sent.

For example, two pieces of information, i.e., information A and information B, may correspond to the APP, and information A is provided with a geographical position condition "Jiangsu" and information B is not provided with any geographical position condition. If the persona information of the user includes a geographical position "Nanjing", the server selects the information A as the information to be sent since the city of Nanjing belongs to the Jiangsu Province, and if the persona information includes a geographical position "Beijing", the server selects the information B as the information to be sent since the city of Beijing does not belong to the Jiangsu Province.

In a particular example, when the persona information of the user includes educational background, the information having highest matching degree with the educational background is selected from the at least two pieces of information as the information to be sent.

In a particular example, when the persona information of the user includes browser cache information, the information having highest matching degree with the browser cache information is selected from the at least two pieces of information as the information to be sent.

For example, two pieces of information, i.e., information A and information B, may correspond to the APP, and information A is provided with a recently browsed information condition "browsing history relating to a dessert shop XX" and information B is provided with a recently browsed information condition "browsing history relating to a coffee shop YY". If the persona information of the user includes a browser cache information "dessert shop XX: desert XX is on sale", the server selects the information A as the information to be sent since the browser cache information "dessert shop XX: desert XX is on sale" belongs to the browsing history relating to the dessert shop XX, and if the persona information includes a browser cache information "group purchase information of coffee shop YY", the server selects the information B as the information to be sent since the browser cache information "group purchase information of coffee shop YY" belongs to the browsing history relating to the coffee shop YY.

In a particular example, when the persona information of the user includes recently shopping information, the information having highest matching degree with the recently shopping information is selected from the at least two pieces of information as the information to be sent.

For example, two pieces of information, i.e., information A and information B, may correspond to the APP, and information A is provided with a recently shopping condition "books" and information B is provided with a recently shopping condition "digital products". If the persona information of the user includes a recently shopping information "<My Life>", the server selects the information A as the information to be sent since the recently shopping information "<My Life>" is a book, and if the persona information includes a recently shopping information "SLR camera", the server selects the information B as the information to be sent since the recently shopping information "SLR camera" belongs to a digital product.

In a particular example, when the persona information of the user includes calendar information, the information having highest matching degree with a location in the calendar information is selected from the at least two pieces of information as the information to be sent.

For example, two pieces of information, i.e., information A and information B, may correspond to the APP, and information A is provided with a geographical position condition "Jiangsu" and information B is not provided with any geographical position condition. If the persona information of the user includes a calendar information, e.g., an airline ticket information of "from Tianjin to Nanjing", the server selects the information A as the information to be sent since the city of Nanjing belongs to Jiangsu Province.

In a particular example, two or more of the above various persona information of the user may be combined, and a weighting mechanism may be introduced with respect to the various persona information, so as to comprehensively compute the matching degree of each piece of information with respect to the APP, and select the information having the highest matching degree as the information to be sent.

In a particular example, in the case where two or more pieces of information may correspond to the APP, and if two pieces of information have the same matching degree, the server selects one piece of information as the information to be sent according to a random algorithm.

It should be noted that the steps performed by the information promoting terminal 120 in each of the above method embodiments may be independently implemented as a method for sending information at the information promoting terminal side. The steps performed by the server 140 may be independently implemented as a method for sending information at the server side. The steps performed by the target terminal 160 may be independently implemented as a method for receiving information at the target terminal side.

The following are embodiments of devices (or terminals) according to the present disclosure, which may be configured to perform the embodiments of methods of the present disclosure. Details not disclosed in the embodiments of devices may be referred to the embodiments of methods.

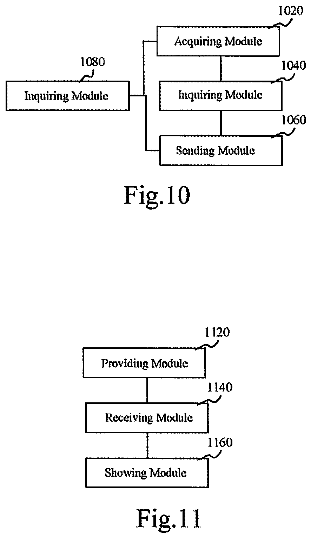

Fig. 10 is a structural diagram illustrating a device (or server) for sending information, according to an exemplary embodiment. The device for sending information may be implemented as a whole or a part of the server 140 of Fig. 1 using a specific hardware circuit or a combination of software and hardware. The device for sending information includes the following components.

An acquiring module 1020 is configured to acquire an identifier of an APP, and the APP is an application having an APP unlock interface.

An inquiring module 1040 is configured to inquire about (or to determine) information corresponding to the identifier of the APP, and the information is information to be promoted with respect to the APP that is identified by an information promoter.

A sending module 1060 is configured to send the information to a target terminal, and the information is configured to be shown in the APP unlock interface corresponding to the APP.

In a particular embodiment, the acquiring module 1020 is configured to receive a request for acquiring information sent from an application lock APP in the target terminal, and the request for acquiring information carries the identifier of the APP locked by the application lock APP.

In a particular embodiment, the sending module 1060 is configured to send the information to an application lock APP in the target terminal, and the application lock APP is configured to generate and show the APP unlock interface including the information when the APP is triggered.

In a particular embodiment, the device further includes a selecting module 1080.

The acquiring module 1020 is configured to, if the inquired information includes at least two pieces of information, acquire persona information of the user of the target terminal.

The selecting module 1080 is configured to select the information having highest matching degree with the persona information of the user from the at least two pieces of information as the information to be sent.

In a particular embodiment, the selecting module 1080 is configured to, if the persona information of the user includes age, select the information having highest matching degree with the age from the at least two pieces of information as the information to be sent;
or,
the selecting module 1080 is configured to, if the persona information of the user includes sex, select the information having highest matching degree with the sex from the at least two pieces of information as the information to be sent;
   or,
the selecting module 1080 is configured to, if the persona information of the user includes geographical position, select the information having highest matching degree with the geographical position from the at least two pieces of information as the information to be sent;
   or,
the selecting module 1080 is configured to, if the persona information of the user includes educational background, select the information having highest matching degree with the educational background from the at least two pieces of information as the information to be sent;
   or,
the selecting module 1080 is configured to, if the persona information of the user includes browser cache information, select the information having highest matching degree with the browser cache information from the at least two pieces of information as the information to be sent;

   or,
the selecting module 1080 is configured to, if the persona information of the user includes recently shopping information, select the information having highest matching degree with the recently shopping information from the at least two pieces of information as the information to be sent;
   or,
the selecting module 1080 is configured to, if the persona information of the user includes calendar information, select the information having highest matching degree with a location in the calendar information from the at least two pieces of information as the information to be sent.

To sum up, in the device for sending information according to the present embodiment, the server inquires about (i.e. determines) information corresponding to the identifier of the APP, the information being information to be promoted with respect to the APP that is identified by an information promoter. After the server sends the information to the target terminal, the target terminal shows the information in the APP unlock interface corresponding to the APP. It may solve the technical problem that a current application lock APP may be used only for locking and unlocking APPs, such that information may be shown in the APP unlock interface of the APP, and information relating to the APP may be provided to the user of the APP, thereby performing the effect of using the APP unlock interface as an effective information promoting window.

Fig. 11 illustrates a structural diagram illustrating a device (or terminal) for receiving information, according to an exemplary embodiment. The device for receiving information may be implemented as a whole or a part of the target terminal 160 of Fig. 1 using a specific hardware circuit or a combination of software and hardware. The device for receiving information includes the following components.

A providing module 1120 is configured to provide an identifier of an APP to a server, and the APP is an application having an APP unlock interface.

A receiving module 1140 is configured to receive information sent from the server, the information is information corresponding to the identifier of the APP.

A showing module 1160 is configured to show the information in the APP unlock interface corresponding to the APP.

In a particular embodiment, the providing module 1120 is configured to send a request for acquiring information to the server via an application lock APP, and the request for acquiring information carries the identifier of the APP locked by the application lock APP.

In a particular embodiment, the receiving module 1140 is configured to receive the information sent from the server via an application lock APP.

In a particular embodiment, the showing module 1160 is configured to show the information in the APP unlock interface corresponding to the APP in a predetermined showing form, and the predetermined showing form includes at least one of the following showing forms:
showing as a background image;
showing as a background animation;
showing as a background of a password input control;
showing in the form of webpage link; and
showing as an APP dock.

To sum up, in the device for receiving information according to the present embodiment, the server inquires about information corresponding to the identifier of the APP, the information being information to be promoted with respect to the APP that is identified by an information promoter. After the server sends the information to the target terminal, the target terminal shows the information in the APP unlock interface corresponding to the APP. It may solve the technical problem that a current application lock APP may be used only for locking and unlocking APPs, such that information may be shown in the APP unlock interface of the APP, and information relating to the APP may be provided to the user of the APP, thereby performing the effect of using the APP unlock interface as an effective information promoting window.

With respect to the devices in the above embodiments, the specific manners for performing operations for individual modules therein have been described in detail in the embodiments regarding the methods, which will not be elaborated herein.

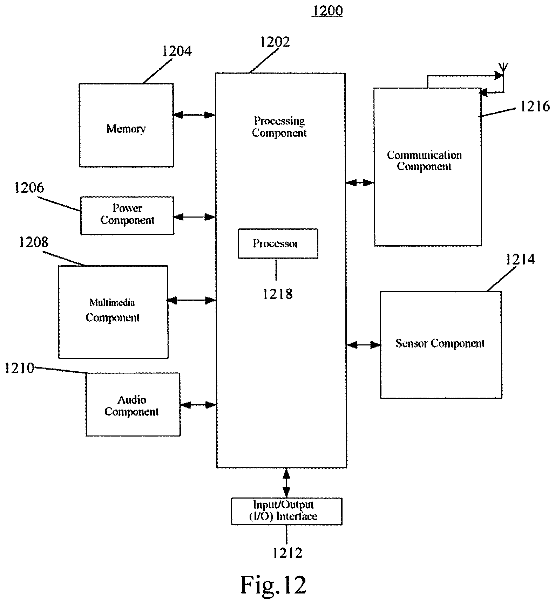

Fig. 12 is a block diagram of a target terminal according to an exemplary embodiment. For example, the target terminal 1200 may be a mobile phone, a computer, a digital broadcast terminal, a messaging device, a gaming console, a tablet, a medical device, exercise equipment, a personal digital assistant, and the like.

Referring to Fig. 12, the target terminal 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the target terminal 1200, such as the operations associated with display, telephone calls, data communications, camera operations, and recording operations. The processing component 1202 may include one or more processors 1218 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the target terminal 1200. Examples of such data include instructions for any applications or methods operated on the target terminal 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the target terminal 1200. The power component 1206 may include a power management system, one or more power sources, and any other components associated with the generation, management, and distribution of power in the target terminal 1200.

The multimedia component 1208 includes a screen providing an output interface between the target terminal 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the target terminal 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the target terminal 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the target terminal 1200. For instance, the sensor component 1214 may detect an open/closed status of the target terminal 1200, relative positioning of components, e.g., the display and the keypad, of the target terminal 1200, a change in position of the target terminal 1200 or a component of the target terminal 1200, a presence or absence of user contact with the target terminal 1200, an orientation or an acceleration/deceleration of the target terminal 1200, and a change in temperature of the target terminal 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the target terminal 1200 and other devices. The target terminal 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the target terminal 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for receiving information.

In exemplary embodiments, there is also provided a non-transitory computer-readable storage medium including instructions, such as included in the memory 1204, executable by the processor 1218 in the target terminal 1200, for performing the above-described methods for receiving information. For example, the non-transitory computer-readable storage medium may be a ROM, a RAM, a CD-ROM, a magnetic tape, a floppy disc, an optical data storage device, and the like.

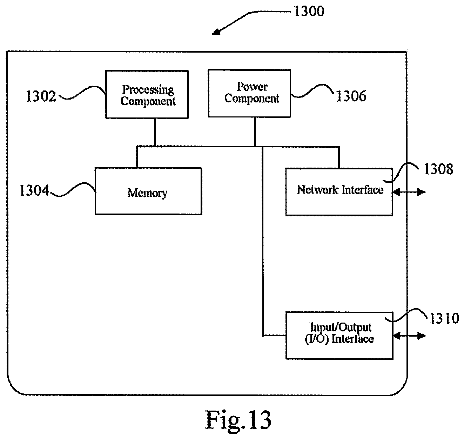

Fig. 13 is a block diagram of a server according to another exemplary embodiment. For example, the server 1300 may be provided as a network side apparatus. Referring to Fig. 13, the server 1300 includes a processing component 1302 that further includes one or more processors, and memory resources represented by a memory 1304 for storing instructions executable by the processing component 1302, such as application programs. The application programs stored in the memory 1304 may include one or more modules each corresponding to a set of instructions. Further, the processing component 1302 is configured to execute the instructions to perform the above described method for sending information.

The server 1300 may also include a power component 1306 configured to perform power management of the server 1300, wired or wireless network interface(s) 1308 configured to connect the server 1300 to a network, and an input/output (I/O) interface 1310. The server 1300 may operate based on an operating system stored in the memory 1304, such as Windows ServerTM, Mac OS XTM, UnixTM, LinuxTM, FreeBSDTM, or the like.

## Claims

1. A method implemented by a terminal (160) for receiving information, wherein the terminal (160) is installed with an application lock application and a first application locked by the application lock application, wherein a user of the terminal uses the application lock application if he wishes to lock one of applications in the terminal, wherein the method comprises:
intercepting, by the application lock application, when triggered by the user, an initiating instruction of the first application, and generating, by the application lock application, an application unlock interface for unlocking the first application;
providing (201, 303) to a server (140) an identifier of the first application, by sending a request for acquiring information to the server via the application lock application, said request carrying the identifier of the first application;
receiving (205, 307) via the application lock application information sent from the server, the information being information corresponding to the identifier of the first application, and comprising a link of webpage associated with the first application; and
generating and showing (205, 308) the information in the application unlock interface corresponding to the first application when the first application is triggered, the user being required to input correct password on the application unlock interface to use the first application, and wherein the link of webpage is displayed on the application unlock interface to allow the user to click on the link and be re-directed to the webpage without entering the password.

2. A terminal (160) for receiving information, wherein the terminal (160) is installed with an application lock application and a first application locked by the application lock application, wherein a user of the terminal uses the application lock application if he wishes to lock one of applications in the terminal, wherein the terminal (160) comprises:
a processor configured to intercept, by the application lock application, when triggered by the user, an initiating instruction of the first application, and generate by the application lock application, an application unlock interface for unlocking the first application;
a providing module (1120), configured to provide to a server (140) an identifier of the first application, by sending a request for acquiring information to the server via the application lock application, said request carrying the identifier of the first application locked by the application lock application;
a receiving module (1140), configured to receive via the application lock application information sent from the server, the information being information corresponding to the identifier of the first application, and comprising a link of webpage associated with the first application; and
a showing module (1160), configured to generate and show the information in the application unlock interface corresponding to the first application when the first application is triggered, the user being required to input correct password on the application unlock interface to use the first application, and wherein the link of webpage is displayed on the application unlock interface to allow the user to click on the link and be re-directed to the webpage without entering the password.

## Patentansprüche

1. Verfahren, implementiert durch ein Endgerät (160) zum Empfangen von Informationen, wobei in dem Endgerät (160) eine Anwendungssperranwendung und eine erste Anwendung installiert ist, die durch die Anwendungssperranwendung gesperrt wird, wobei ein Benutzer des Endgeräts die Anwendungssperranwendung verwendet, wenn er eine der Anwendungen in dem Endgerät sperren möchte, wobei das Verfahren Folgendes umfasst:
Abfangen, durch die Anwendungssperranwendung, einer Initiierungsanweisung der ersten Anwendung, wenn diese durch den Benutzer ausgelöst wird, und Erzeugen, durch die Anwendungssperranwendung, einer Anwendungsfreigabeschnittstelle zum Freigeben der ersten Anwendung;
Bereitstellen (201, 303), an einen Server (140), einer Kennung der ersten Anwendung durch Senden einer Anforderung zum Erfassen von Informationen über die Anwendungssperranwendung, wobei die Anforderung die Kennung der ersten Anwendung trägt;
Empfangen (205, 307), über die Anwendungssperranwendung, von Anwendungsinformationen, die von dem Server gesendet werden, wobei die Informationen Informationen sind, die der Kennung der ersten Anwendung entsprechen, und umfassend einen Webseiten-Link, der mit der ersten Anwendung assoziiert ist; und
Erzeugen und Anzeigen (205, 308) der Informationen in der Anwendungsfreigabeschnittstelle, die der ersten Anwendung entspricht, wenn die erste Anwendung ausgelöst wird, wobei der Benutzer aufgefordert wird, ein korrektes Passwort in die Anwendungsfreigabeschnittstelle einzugeben, um die erste Anwendung zu nutzen, und wobei der Webseiten-Link auf der Anwendungsfreigabeschnittstelle angezeigt wird, um dem Benutzer zu ermöglichen, auf den Link zu klicken und zu der Webseite weitergeleitet zu werden, ohne das Passwort einzugeben.

2. Endgerät (160) zum Empfangen von Informationen, wobei in dem Endgerät (160) eine Anwendungssperranwendung und eine erste Anwendung installiert ist, die durch die Anwendungssperranwendung gesperrt wird, wobei ein Benutzer des Endgeräts die Anwendungssperranwendung verwendet, wenn er eine der Anwendungen in dem Endgerät sperren möchte, wobei das Endgerät (160) Folgendes umfasst:
einen Prozessor, der konfiguriert ist, um durch die Anwendungssperranwendung, eine Initiierungsanweisung der ersten Anwendung abzufangen, wenn diese durch den Benutzer ausgelöst wird, und Erzeugen, durch die Anwendungssperranwendung, einer Anwendungsfreigabeschnittstelle zum Freigeben der ersten Anwendung;
ein Bereitstellungsmodul (1120), das konfiguriert ist, um einem Server (140) eine Kennung der ersten Anwendung durch Senden einer Anforderung zum Erfassen von Informationenüber die Anwendungssperranwendung bereitzustellen, wobei die Anforderung die Kennung der ersten Anwendung trägt, die durch die Anwendungssperranwendung gesperrt ist;
ein Empfangsmodul (1140), das konfiguriert ist, um über die Anwendungssperranwendung Anwendungsinformationen zu empfangen, die von dem Server gesendet werden, wobei die Informationen Informationen sind, die der Kennung der ersten Anwendung entsprechen, und umfassend einen Webseiten-Link, der mit der ersten Anwendung assoziiert ist; und
ein Anzeigemodul (1160), das konfiguriert ist, um die Informationen in der Anwendungsfreigabeschnittstelle, die der ersten Anwendung entspricht, zu erzeugen und anzuzeigen, wenn die erste Anwendung ausgelöst wird, wobei der Benutzer aufgefordert wird, ein korrektes Passwort in die Anwendungsfreigabeschnittstelle einzugeben, um die erste Anwendung zu nutzen, und wobei der Webseiten-Link auf der Anwendungsfreigabeschnittstelle angezeigt wird, um dem Benutzer zu ermöglichen, auf den Link zu klicken und zu der Webseite weitergeleitet zu werden, ohne das Passwort einzugeben.

## Revendications

1. Procédé mis en oeuvre par un terminal (160) pour recevoir des informations, dans lequel le terminal (160) est installé avec une application de verrouillage d'applications et une première application verrouillée par l'application de verrouillage d'applications, dans lequel un utilisateur du terminal utilise l'application de verrouillage d'applications s'il souhaite verrouiller l'une des applications dans le terminal, dans lequel le procédé comprend le fait de :
intercepter, par le biais de l'application de verrouillage d'applications, lorsqu'elle est déclenchée par l'utilisateur, une instruction d'initiation de la première application, et générer, par le biais de l'application de verrouillage d'applications, une interface de déverrouillage d'applications, pour déverrouiller la première application ;
fournir (201, 303), à un serveur (140), un identifiant de la première application, en envoyant une demande d'acquisition d'informations au serveur par l'intermédiaire de l'application de verrouillage d'applications, ladite demande portant l'identifiant de la première application ;
recevoir (205, 307), par l'intermédiaire de l'application de verrouillage d'applications, des informations envoyées par le serveur, les informations étant des informations correspondant à l'identifiant de la première application, et comprenant un lien vers une page web associée à la première application ; et
générer et afficher (205, 308) les informations dans l'interface de déverrouillage d'applications correspondant à la première application lorsque la première application est déclenchée, l'utilisateur étant invité à saisir un mot de passe correct dans l'interface de déverrouillage d'applications afin d'utiliser la première application, et dans lequel le lien vers la page web est affiché dans l'interface de déverrouillage d'applications pour permettre à l'utilisateur de cliquer sur le lien et d'être redirigé vers la page web sans avoir à saisir le mot de passe.

2. Terminal (160) destiné à recevoir des informations, dans lequel le terminal (160) est installé avec une application de verrouillage d'applications et une première application verrouillée par l'application de verrouillage d'applications, dans lequel un utilisateur du terminal utilise l'application de verrouillage d'applications s'il souhaite verrouiller l'une des applications dans le terminal, dans lequel le terminal (160) comprend :
un processeur configuré de manière à intercepter, par le biais de l'application de verrouillage d'applications, lorsqu'elle est déclenchée par l'utilisateur, une instruction d'initiation de la première application, et à générer, par le biais de l'application de verrouillage d'applications, une interface de déverrouillage d'applications pour déverrouiller la première application ;
un module de fourniture (1120), configuré de manière à fournir, à un serveur (140), un identifiant de la première application, en envoyant une demande d'acquisition d'informations au serveur, par l'intermédiaire de l'application de verrouillage d'applications, ladite demande portant l'identifiant de la première application verrouillée par l'application de verrouillage d'applications ;
un module de réception (1140), configuré de manière à recevoir, par l'intermédiaire de l'application de verrouillage d'applications, des informations envoyées par le serveur, les informations étant des informations correspondant à l'identifiant de la première application, et comprenant un lien vers une page web associée à la première application ; et
un module d'affichage (1160), configuré de manière à générer et afficher les informations dans l'interface de déverrouillage d'applications correspondant à la première application lorsque la première application est déclenchée, l'utilisateur étant invité à saisir un mot de passe correct dans l'interface de déverrouillage d'applications afin d'utiliser la première application, et dans lequel le lien vers la page web est affiché dans l'interface de déverrouillage d'applications pour permettre à l'utilisateur de cliquer sur le lien et d'être redirigé vers la page web sans avoir à saisir le mot de passe.
